# EUROPÄISCHE PATENTSCHRIFT

(11) **EP 2 627 838 B1**
(45) Veröffentlichungstag und Bekanntmachung des Hinweises auf die Patenterteilung: **07.06.2017**
(21) Anmeldenummer: 11767013.3
(22) Anmeldetag: 10.10.2011
(51) Int. Cl.: E04B 1/76, F16B 13/00, B25B 21/00, E04D 15/04

(54) **WERKZEUG ZUR MONTAGE VON DÄMMSTOFFHALTERN**
TOOL FOR THE ASSEMBLY OF AN INSULATION HOLDER
DISPOSITIF POUR L'ASSEMBLAGE DES MOYENS POUR FIXATION DU MATIÉRIAU ISOLANT

(30) Priorität: 14.10.2010 DE 102010048536
(43) Veröffentlichungstag der Anmeldung: 21.08.2013
(73) Patentinhaber: SFS Intec Holding AG, 9435 Heerbrugg (CH)
(72) Erfinder: GASSER, Daniel, CH-9444 Diepoldsau (CH); SAHLI, Richard, CH-Widnau 9443 (CH); KORHONEN, Tero, S-73494 Strömsholm (SE); HULTGREN, Joakim, S-725 97 Västerås (SE)
(86) Internationale Anmeldenummer: PCT/EP2011/067632
(87) Internationale Veröffentlichungsnummer: WO 2012/049114

(56) Entgegenhaltungen:
- EP-A2- 1 982 797
- EP-A2- 2 191 938
- DE-U1- 9 311 122
- US-A- 5 992 274

## Beschreibung

Die Erfindung betrifft ein Werkzeug zur Montage von Dämmstoffhaltern auf Dächern oder an Wänden, wobei die Dämmstoffhalter jeweils einen hohlzylindrischen Schaft mit einem Dämmstoffhalteteller und eine in den Schaft eingeführte Befestigungsschraube aufweisen, mit einer Aufnahme für den Dämmstoffhalter und mit einem Schraubendreher zum Eindrehen der Befestigungsschraube des Dämmstoffhalters in eine Dachunterkonstruktion oder eine Wand, wobei zwischen der Aufnahme und dem Schraubendreher ein Sperrelement zum Verhindern einer axialen Relativverschiebbarkeit von Aufnahme und Schraubendreher angeordnet ist und dass dem Sperrelement eine Ausrückeinrichtung zum Freigeben der axialen Relativverschiebbarkeit von Aufnahme und Schraubendreher zugeordnet ist, wobei die Aufnahme ein freies Ende einer den Schraubendreher umschließenden Sperrhülse ist und die Ausrückeinrichtung eine die Sperrhülse umschließende, manuell verschiebbare Auslösehülse umfasst und dass das die Aufnahmen bildende freie Ende der Sperrhülse einen Teller durchsetzt und über den Teller axial vorsteht. Ein aus dem Dokument EP 0 921 251 B1 bekanntes Werkzeug dient zur Montage von Dämmstoffhaltern zur Befestigung einer Dachbahn od. dgl. aus beispielsweise Bitumen auf einem Dämmstoff. Bei harten und/oder mehrlagigen Bitumendachbahnen ist ein Durchdrücken des Schaftes des Dämmstoffhalters auch mit großem Kraftaufwand nicht möglich. Das bekannte Werkzeug soll deshalb ermöglichen, dass ein Dämmstoffhalter problemlos durch eine Dachbahn od. dgl. aus beispielsweise Bitumen hindurch gesetzt werden kann. Dafür hat das bekannte Werkzeug einen Drehmitnehmer, der drehfest mit dem Schraubendreher ist. Auf diese Weise wird der Dämmstoffhalter bei rotierendem Antrieb des Schraubendrehers in Rotation versetzt. Der rotierende Schaft des Dämmstoffhalters durchdringt auch mehrlagige, harte Bitumenbahnen, da die entstehende Reibungswärme das Bitumen erweicht. Das bekannte Werkzeug weist eine Ausrückeinrichtung auf, die die drehfeste Verbindung des Dämmstoffhalters mit dem Schraubendreher löst, bevor der Dämmstoffhalteteller des Dämmstoffhalters einen Untergrund, also die Dachbahn od. dgl. aus beispielsweise Bitumen erreicht. Es ist unerheblich, dass die Befestigungsschraube dabei zum vollständigen Eindringen in die Unterkonstruktion weiterhin rotierend angetrieben wird. Es ist notwendig, dass die Rotation des Dämmstoffhalters beendet wird, wenn der Dämmstoffhalteteller die Dachbahn od. dgl. aus beispielsweise Bitumen erreicht, da ansonsten die Gefahr des Verdrehens der Dachbahn und der Faltenbildung besteht.

Für den Einsatz bei der Montage von Dämmstoffhaltern auf Dächern oder an Wänden, bei dem die Dämmstoffhalter vor dem Einsatz des eingangs genannten Werkzeuges durch Hindurchdrücken des Schaftes des Dämmstoffhalters durch einen Dämmstoff od. dgl. und durch Einführen desselben in eine in der Dachunterkonstruktion oder einer Wand vorbereitete Bohrung gesetzt werden, also bei einem Einsatz, bei dem für das Vorpositionieren der Dämmstoffhalter überhaupt kein Werkzeug mit einem rotierenden Schraubendreher benötigt wird, ist das bekannte Werkzeug weder geeignet noch vorgesehen.

Ein Setzwerkzeug, das dem Werkzeug der eingangs genannten Art entspricht, ist aus dem Dokument EP 1 982 797 A2 bekannt. Als Aufnahme für einen Dämmstoffhalter dient bei diesem Setzwerkzeug eine zweite Antriebswelle, die an ihrem freien Ende einen Außenvielkant als Drehmitnahmemittel für den Dämmstoffdübel aufweist. Eine Ausrückeinrichtung bildet bei dem Setzwerkzeug eine zwischen einem Gehäuse einer Kupplung und der zweiten Antriebswelle angeordnete Klemmhülse. Das Gehäuse ist Teil einer Positioniereinrichtung. Ein Anschlagteller ist auf der Außenseite der Positioniereinrichtung gelagert, und zwar axial positionierbar zum Einstellen der Setztiefe des Dämmstoffdübels. Sobald der Anschlagteller des Setzwerkzeuges an der Oberfläche der Dämmstoffplatte anliegt, wird bei einem weiteren Vorschub des Setzwerkzeuges in Setzrichtung ein entsprechend großer Druck erzeugt, der diese Kupplung zwischen der ersten und der zweiten Antriebswelle auslöst. Dadurch wird die Drehmomentübertragung von der ersten auf die zweite Antriebswelle und somit auf den Dämmstoffdübel unterbrochen. Das geschieht ohne ein Zutun des Anwenders in einem Arbeitsschritt bei immer der gleichen, aufgrund der zuvor mit dem axial positionierten Anschlagteller bestimmten Setztiefe des Dämmstoffdübels. Die erste Antriebswelle des Setzwerkzeuges wird zur Verankerung des Dämmstoffdübels im Untergrund weiterhin rotatorisch angetrieben.

Aufgabe der Erfindung ist es, ein Werkzeug zur Montage von Dämmstoffhaltern so auszubilden, dass mit ihm bereits von Hand vorpositionierte Dämmstoffhalter in eine endgültige Setzposition gebracht werden können.

Diese Aufgabe ist erfindungsgemäß ausgehend von einem Werkzeug der eingangs genannten Art dadurch gelöst, dass die Auslösehülse manuell verschiebbar ausgebildet ist und dass das die Aufnahme bildende freie Ende der Sperrhülse einen Teller durchsetzt und über den Teller axial vorsteht.

Das erfindungsgemäß ausgebildete Werkzeug kann, so lange das Sperrelement eine axiale Relativverschiebbarkeit von Aufnahme und Schraubendreher wirksam verhindert, eingesetzt werden, um beispielsweise von Hand einen in dem Dämmstoff und in einer Bohrung in einer Dachunterkonstruktion oder in einer Wand vorpositionierten Dämmstoffhalter einfach durch Druckbeaufschlagung mit dem Werkzeug in eine Position zu bringen, in welcher der Dämmstoffhalteteller auf dem Dämmstoff, gegebenenfalls auf einer diesen bedeckenden Dachbahn od. dgl., aufliegt oder bündig darin versenkt ist. Die Ausbildung des erfindungsgemäßen Werkzeuges ist dabei so getroffen, dass dieses mit der Aufnahme in den Schaft des Dämmstoffhalters einfasst und dass der die Aufnahme umgebende Teil des Werkzeuges auf dem Dämmstoffhalteteller wenigstens in dem Bereich eines die Öffnung des hohlzylindrischen Schaftes umgebenden Randes aufliegt, so dass mit dem Werkzeug Druck auf den Dämmstoffhalter ausgeübt werden kann. Der Teller bildet ein Widerlager für einen auf die Aufnahme aufgeschobenen Dämmstoffhalter. Es lässt sich so ein durch das Werkzeug auf einen vorpositionierten Dämmstoffhalter ausgeübter Druck gleichmäßig über den Dämmstoffhalteteller des Dämmstoffhalters verteilen. Die Anordnung ist dabei weiter so getroffen, dass in dieser Druckausübungsphase ein vorderes Ende eines Schaftes des Schraubendrehers noch nicht mit der einzudrehenden Befestigungsschraube in Berührung kommt. Sobald der Dämmstoffhalteteller die angestrebte Position erreicht hat, wird mittels der Ausrückeinrichtung die axiale Relativverschiebbarkeit von Aufnahme und Schraubendreher freigegeben, so dass der den Schraubendreher umgebende Teil des Werkzeuges von dem Dämmstoffhalter auf dem Schraubendreher axial wegbewegt und der Schraubendreher selbst in den Schaft des Dämmstoffhalters hinein bewegt und mit der einzudrehenden Befestigungsschraube formschlüssig in Eingriff gebracht werden kann. Nach dem vollständigen Eindrehen der Befestigungsschraube kann der Schraubendreher aus dem Schaft des Dämmstoffhalters herausgezogen und das Werkzeug selbst durch Zurückbewegen der Ausrückeinrichtung in deren Ausgangsstellung wieder in seine Ausgangsstellung gebracht und so für das Setzen des nächsten Dämmstoffhalters vorbereitet werden.

Vorteilhafte Ausgestaltungen der Erfindung bilden die Gegenstände der Unteransprüche.

In einer Ausgestaltung des Werkzeuges nach der Erfindung sind die Sperrhülse und die Auslösehülse durch eine zwischen ihnen angeordnete Feder in eine Ausgangsstellung vorgespannt. Das erleichtert das Zurückstellen des Werkzeuges in seine Ausgangsstellung.

In einer weiteren Ausgestaltung des Werkzeuges nach der Erfindung weist das Sperrelement wenigstens einen zwischen dem Schraubendreher und der Auslösehülse angeordneten und wahlweise mit einer Vertiefung in dem Schraubendreher oder mit einer Vertiefung in der Auslösehülse in und außer Eingriff bringbaren Wälzkörper auf. Der Einsatz eines Wälzkörpers wie zum Beispiel einer Kugel trägt nicht nur zur weiteren Vereinfachung des Aufbaus des Werkzeuges bei, sondern auch zu einem auf lange Sicht störungsfreien Betrieb des Werkzeuges.

In einer weiteren Ausgestaltung des Werkzeuges nach der Erfindung ist zwischen der Sperrhülse und dem Schraubendreher ein Wegbegrenzungs- und Drehmitnahmeelement angeordnet. Das Wegbegrenzungs- und Drehmitnahmeelement, das beispielsweise auch ein Wälzkörper sein kann, trägt zu einem einfachen Aufbau und zu einem störungsfreien Betrieb des Werkzeuges weiter bei.

In einer weiteren Ausgestaltung des Werkzeuges nach der Erfindung weist der Schraubendreher für das Wegbegrenzungs- und Drehmitnahmeelement wenigstens einen Anschlag für die hintere Begrenzung der axialen Relativverschiebung von Aufnahme und Schraubendreher auf. Die vordere Begrenzung der axialen Relativverschiebung von Aufnahme und Schraubendreher kann über einen weiteren Anschlag oder - wie bevorzugt - über das Sperrelement erfolgen. So lassen sich auf einfache Weise die Ausgangsstellung des Werkzeuges und die Ausrückstellung desselben festlegen.

In einer weiteren Ausgestaltung des Werkzeuges nach der Erfindung ist das die Aufnahme bildende freie Ende der Sperrhülse im Querschnitt unrund ausgebildet. Diese Ausgestaltung ermöglicht in Kombination mit einem Dämmstoffhalter, bei dem die Öffnung des hohlzylindrischen Schaftes im Querschnitt komplementär ausgebildet ist, eine drehfeste Verbindung zwischen der Aufnahme und dem Dämmstoffhalter. Wenn ein vorpositionierter Dämmstoffhalter mit Hilfe des erfindungsgemäßen Werkzeuges in eine endgültige Lage gebracht wird, indem auf den Dämmstoffhalter mit dem Werkzeug Druck ausgeübt wird, so kann in dieser Ausgestaltung zusätzlich der Schraubendreher und somit die Aufnahme und damit der Dämmstoffhalter bei dessen Setzvorgang in Drehung versetzt werden. Diese Ausgestaltung ist in Fällen hilfreich, in welchen sich der Dämmstoffhalteteller nicht einfach in den Dämmstoff oder in die diesen bedeckende Bahn eindrücken lässt und besser durch Einfräsen in der Bahn versenkt werden kann.

Ausführungsbeispiele der Erfindung werden im folgenden unter Bezugnahme auf die Zeichnungen näher beschrieben. Es zeigt:
- Fig. 1: eine erste Phase eines Einsatzes eines Werkzeuges nach der Erfindung, in welcher dieses über einem vorpositionierten Dämmstoffhalter angeordnet ist,
- Fig. 2: eine zweite Phase, in welcher mit Hilfe des Werkzeuges der Dämmstoffhalter auf dem Dämmstoff in Anlage gebracht worden ist,
- Fig. 3: eine dritte Phase, in welcher eine Ausrückeinrichtung betätigt und dadurch eine Relativverschiebung zwischen einem Schraubendreher und einer Aufnahme des Werkzeuges ermöglicht und der Schraubendreher mit einer einzudrehenden Befestigungsschraube formschlüssig in Eingriff gebracht worden ist,
- Fig. 4: eine vierte Phase, in welcher der Dämmstoffhalter endgültig gesetzt worden ist, so dass sein Dämmstoffhalteteller im Vergleich mit der dritten Phase nunmehr in dem Dämmstoff bündig versenkt ist,
- Fig. 5: eine Längsschnittansicht des Werkzeuges nach der Erfindung, das sich in einer Ausgangsposition befindet, die dessen Einsatz in der ersten und der zweiten Phase entspricht,
- Fig. 6: als eine Einzelheit den Dämmstoffhalter, wobei die Befestigungsschraube nicht gezeigt ist,
- Fig. 7: eine Draufsicht auf den Dämmstoffhalteteller des Dämmstoffhalters nach Fig. 6 und
- Fig. 8: das Werkzeug nach Fig. 5 in einer perspektivischen Darstellung.

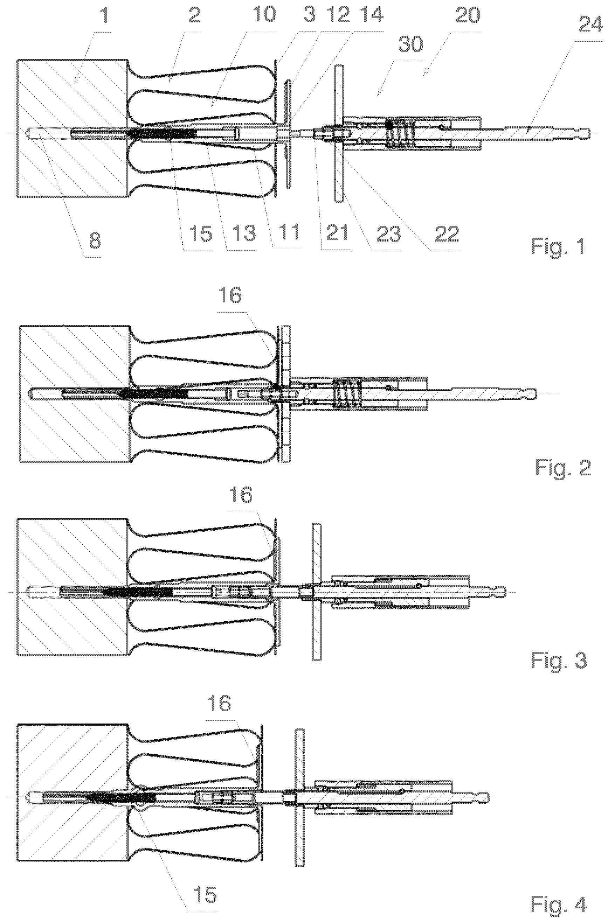

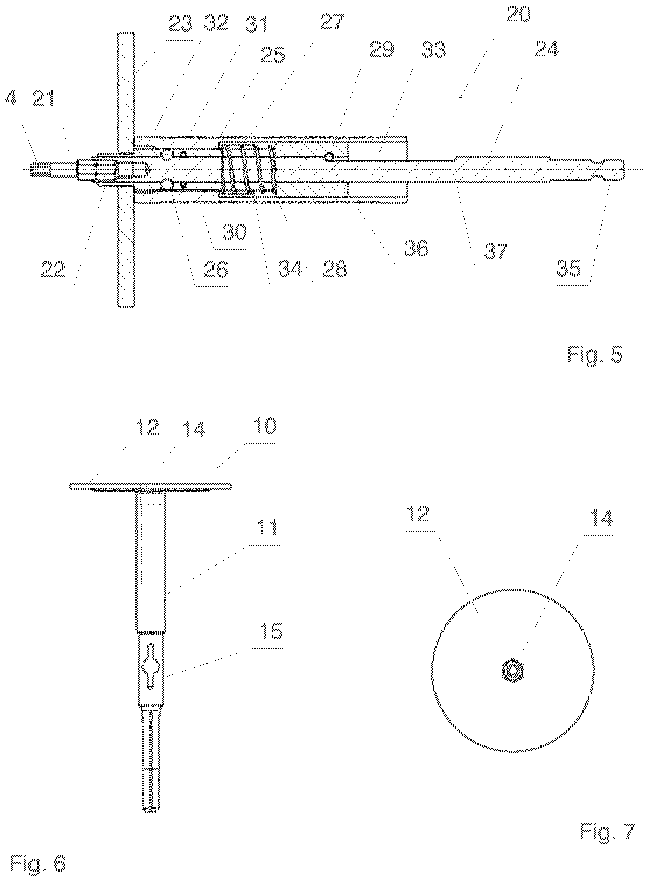

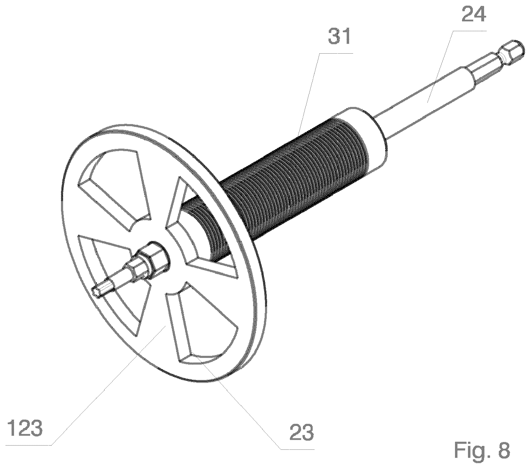

Unter Bezugnahme auf die Figuren 5 - 8 werden der Aufbau einer bevorzugten Ausführungsform eines insgesamt mit 20 bezeichneten Werkzeuges und eines mit dem Werkzeug 20 auf einem Dach oder an einer Wand zu montierenden Dämmstoffhalters 10 beschrieben. Anschließend wird dann unter Bezugnahme auf die Fig. 1 - 4 die Montage des Dämmstoffhalters 10 mit dem Werkzeug 20 beschrieben. Fig. 5 zeigt eine Längsschnittansicht des Werkzeuges 20, das sich in einer Ausgangsposition befindet. Fig. 6 zeigt als eine Einzelheit den Dämmstoffhalter 10, wobei eine in einem hohlzylindrischen Schaft 11 des Dämmstoffhalters eingeführte Befestigungsschraube 13 (Fig. 1) nicht gezeigt ist. Fig. 7 zeigt eine Draufsicht auf einen Dämmstoffhalteteller 12 des Dämmstoffhalters 10. Fig. 8 zeigt das Werkzeug 20 nach Fig. 5 in einer perspektivischen Darstellung.

Gemäß der Darstellung in Fig. 5 umfasst das Werkzeug 20 einen insgesamt zylindrisch ausgebildeten Schraubendreher 24 zum Eindrehen der Befestigungsschraube 13 des Dämmstoffhalters 10 in eine Wand 1, die in den Fig. 1 - 4 gezeigt ist, oder in eine nicht gezeigte Dachunterkonstruktion. Der Schraubendreher 24 ist an seinem in Fig. 5 rechten Ende mit einer im Querschnitt unrunden Drehmitnahme 35 versehen, mit der er in einer Drehmitnahme eines Drehantriebswerkzeuges wie einem Elektroschrauber, einer Bohrmaschine od. dgl. kraft- oder formschlüssig halterbar ist. An seinem zu der Drehmitnahme 35 entgegengesetzten Ende ist der Schraubendreher 24 mit einer im Querschnitt achteckigen axialen Öffnung versehen, in die ein Bit 21 eingesteckt ist. Der Schraubendreher 24 ist mit Hilfe des nicht dargestellten Drehantriebswerkzeuges um eine Drehachse 4 drehbar. Das zu der Drehmitnahme 35 entgegengesetzte Ende des Schraubendrehers 24 ist darüber hinaus mit einer Aufnahme 22 für den Dämmstoffhalter 10 versehen. Die Aufnahme 22 ist ein freies Ende einer den Schraubendreher 24 umschließenden zylindrischen Sperrhülse 25. Zwischen der Aufnahme 22 und dem Schraubendreher 24 sind zwei Sperrelemente 26 diametral entgegengesetzt angeordnet, die in ihrer in Fig. 5 gezeigten Stellung eine axiale Relativverschiebbarkeit von Aufnahme 22 und Schraubendreher 24 verhindern. Den Sperrelementen 26, bei welchen es sich jeweils um einen Wälzkörper und in dem dargestellten Ausführungsbeispiel jeweils um eine Kugel handelt, ist eine Ausrückeinrichtung 30 zum Freigeben der axialen Relativverschiebbarkeit von Aufnahme 22 und Schraubendreher 24 zugeordnet. Die Ausrückeinrichtung 30 umfasst eine zylindrische, die Sperrhülse 25 umschließende, manuell verschiebbare Auslösehülse 31. Die Sperrhülse 25 und die Auslösehülse 31 sind durch eine zwischen ihnen angeordnete Druckschraubenfeder 28 in eine Ausgangsstellung vorgespannt, die in Fig. 5 gezeigt ist und der Ausgangsstellung des Werkzeuges 20 entspricht. Die durch zwei Kugeln gebildeten beiden Sperrelemente 26 sind zwischen dem Schraubendreher 24 und der Auslösehülse 31 angeordnet und werden jeweils durch die Auslösehülse 31 mit einer Vertiefung in dem Schraubendreher 24 in Eingriff gehalten, wie es in Fig. 5 gezeigt ist, oder können in eine Ausnehmung 32 in der Auslösehülse 31 ausweichen, wie es in den Fig. 3 und 4 gezeigt ist.

Der Schraubendreher 24 ist gemäß der Darstellung in Fig. 5 außen mit einer Ausnehmung versehen, die sich über einen Teil der Länge des Schraubendrehers erstreckt und deren Boden eine Führungsbahn 33 für ein Wegbegrenzungs- und Drehmitnahmeelement 29 bildet. Die beiden axialen Enden der Ausnehmung bilden Anschläge 36 bzw. 37 für das Wegbegrenzungs- und Drehmitnahmeelement 29. Der gegenseitige Abstand der Anschläge 36, 37 legt das Ausmaß der axialen Relativverschiebung von Aufnahme 22 und Schraubendreher 24 fest. Die vordere Begrenzung der axialen Relativverschiebung kann statt über den Anschlag 36 auch über die Sperrelemente 26 erfolgen. In der in Fig. 5 gezeigten Ausgangsstellung des Werkzeuges 20 ist das Wegbegrenzungs- und Drehmitnahmeelement 29, bei welchem es sich um einen in der Innenwand der Sperrhülse 25 gelagerten Wälzkörper wie z.B. eine Kugel handelt, an dem Anschlag 36 in Anlage. In einer in Fig. 3 gezeigten Stellung ist das Wegbegrenzungs- und Drehmitnahmeelement 29 an dem anderen Anschlag 37 in Anlage. In dieser Stellung ist der Schraubendreher 24 aus der Aufnahme 22 so weit ausgefahren, dass das Bit 21 mit einer komplementären Vertiefung in dem Kopf der Befestigungsschraube 13 formschlüssig in Eingriff ist, was weiter unten noch näher beschrieben wird. Die beiden Sperrelemente 26 gelangen in die Ausnehmung 32 in der Auslösehülse 31, wenn die Auslösehülse 31 in der Darstellung in Fig. 5 manuell nach rechts gezogen wird, nämlich aus der Stellung nach Fig. 2 in die Stellung nach Fig. 3, was ebenfalls weiter unten noch näher beschrieben wird.

Das die Aufnahme 22 bildende freie Ende der Sperrhülse 25 durchsetzt einen Teller 23 und steht über dem Teller 23 axial vor, wie es in Fig. 5 gezeigt ist. An ihrem in der Darstellung in Fig. 5 rechten Ende weist die Aufnahme 22 eine Ringschulter auf, mit der sich die Sperrhülse 25 auf dem Teller 23 abstützt. Die Auslösehülse 31 kann in der Darstellung in Fig. 5 auf der Sperrhülse 25 so weit nach rechts gezogen werden, bis ein durch eine Anschlaghülse 27 gebildeter Anschlag 34 an einer gegenüberliegenden Schulter der Sperrhülse 25, auf der sich auch die Feder 28 abstützt, in Anlage ist. Der Teller 23 ist gemäß Fig. 8 mit Durchbrüchen 123 versehen. Die Durchbrüche 123 dienen zur Gewichtsreduktion und um durch den Teller 23 zu sehen.

Das die Aufnahme 22 bildende freie Ende der Sperrhülse 25 ist im Querschnitt unrund ausgebildet, und zwar komplementär zu der Querschnittsform eines in dem Dämmstoffhalteteller 12 ausgebildeten Innenangriffes 14.

Der Dämmstoffhalter 10 ist auf einem Teil seiner Länge mit einem Längenkompensationselement 15 versehen, das eine Art Knautschzone bildet, die sich beim Eindrehen der Befestigungsschraube 13 in dem Maße auffaltet, wie der Dämmstoffhalteteller 12 durch das Anziehen der Schraube in dem Dämmstoff 2 versenkt wird, was ein Vergleich der Fig. 3 und 4 ohne Weiteres erkennen lässt. Alle Teile des Werkzeuges 20 bestehen aus Metall, vorzugsweise aus Stahl.

Die Montage des Dämmstoffhalters 10 wird nun unter Bezugnahme auf die Fig. 1 - 4 beschrieben.

Fig. 1 zeigt eine erste Phase des Einsatzes des Werkzeuges 20, in welcher dieses über einem Dämmstoffhalter 10 angeordnet ist, welcher mit dem freien Ende des Schaftes 11 in einer Bohrung 8 so vorpositioniert worden ist, dass der Dämmstoffhalteteller 12 noch Abstand von einer den Dämmstoff 2 bedeckenden Bahn 3 aufweist. In dieser ersten Phase ist das Werkzeug 20 in seiner Ausgangsstellung, in welcher die Auslösehülse 31 mit ihrem in der Darstellung in Fig. 1 linken Ende an dem Teller 23 anliegt, so dass die Sperrhülse 25 mit der daran ausgebildeten Aufnahme 22 einerseits und der Schraubendreher 24 andererseits nicht axial relativverschiebbar sind. Der Schraubendreher 24 ist mit seiner Drehmitnahme 35 mit einem nicht dargestellten Elektroschrauber od. dgl. kraft- oder formschlüssig in Eingriff. Der Elektroschrauber od. dgl. kann in dieser ersten Phase benutzt werden, um von Hand einen in den Dämmstoff 2 und in der Bohrung 8 in der Wand 1 vorpositionierten Dämmstoffhalter 10 einfach durch Druckbeaufschlagung in der Darstellung in Fig. 1 in Richtung nach links in eine Position zu bringen, in welcher der Dämmstoffhalteteller 12 auf der den Dämmstoff 2 bedeckenden Bahn 3 aufliegt. Diese zweite Phase, in welcher mit Hilfe des Elektroschraubers od. dgl. der Dämmstoffhalter 10 auf der Bahn 3 in Anlage gebracht worden ist, ist in Fig. 2 gezeigt. Die Ausbildung des Werkzeuges 20 ist so getroffen, dass dieses mit der Aufnahme 22 in den Innenangriff 14 des Dämmstoffhalters 10 einfasst und dass der der Aufnahme 22 benachbarte Teil des Werkzeuges 20 auf dem Dämmstoffhalteteller 12 wenigstens in dem Bereich eines den Drehangriff 14 des Dämmstoffhalters 10 umgebenden Randes aufliegt, so dass mit dem Werkzeug 20 Druck auf den Dämmstoffhalter 10 ausgeübt werden kann. Die Anordnung ist dabei weiter so getroffen, dass in dieser Druckausübungsphase der Bit des Schraubendrehers 24 noch nicht mit der einzudrehenden Befestigungsschraube 13 in Berührung kommt.

Fig. 3 zeigt eine dritte Phase, in welcher die Ausrückeinrichtung 30 betätigt ist und dadurch eine axiale Relativverschiebung zwischen dem Schraubendreher 24 und der Aufnahme 22 des Werkzeuges 20 ermöglicht und der Schraubendreher 24 mit der einzudrehenden Befestigungsschraube 13 formschlüssig in Eingriff gebracht worden ist. Dabei ist der den Schraubendreher 24 umgebende Teil des Werkzeuges 20 von dem Dämmstoffhalter 10 auf dem Schraubendreher 24 axial wegbewegt und der Schraubendreher 34 selbst in den Schaft 11 des Dämmstoffhalters 10 hinein bewegt und mit der einzudrehenden Befestigungsschraube 13 formschlüssig in Eingriff gebracht worden.

Fig. 4 zeigt eine vierte Phase, in der der Dämmstoffhalter 10 endgültig gesetzt worden ist, so dass sein Dämmstoffhalteteller 12 im Vergleich mit der dritten Phase nach Fig. 3 nunmehr in einem Bereich 16 in dem Dämmstoff 2 bündig mit der Oberseite der Bahn 3 versenkt ist. Nach dem vollständigen Eindrehen der Befestigungsschraube 13 kann der Schraubendreher 24 aus dem Schaft 11 des Dämmstoffhalters 10 herausgezogen und das Werkzeug 20 selbst durch Zurückbewegen der Ausrückeinrichtung 30 in deren Ausgangsstellung wieder in seine Ausgangsstellung gebracht und so für die Montage des nächsten Dämmstoffhalters 10 vorbereitet werden.

### Bezugszeichenliste

- 1: Wand
- 2: Dämmstoff
- 3: Bahn
- 4: Drehachse
- 8: Bohrung
- 10: Dämmstoffhalter
- 11: Schaft
- 12: Dämmstoffhalteteller
- 13: Befestigungsschraube
- 14: Innenangriff
- 15: Längenkompensationselement
- 16: Bereich
- 20: Werkzeug
- 21: Bit
- 22: Aufnahme
- 23: Teller
- 24: Schraubendreher
- 25: Sperrhülse
- 26: Sperrelement
- 27: Anschlaghülse
- 28: Feder
- 29: Wegbegrenzungs- und Drehmitnahmeelement
- 30: Ausrückeinrichtung
- 31: Auslösehülse
- 32: Ausnehmung
- 33: Führungsbahn
- 34: Anschlag
- 35: Drehmitnahme
- 36: Anschlag
- 37: Anschlag
- 123: Durchbruch

## Patentansprüche

1. Werkzeug zur Montage von Dämmstoffhaltern (10) auf Dächern oder an Wänden,
wobei die Dämmstoffhalter (10) jeweils einen hohlzylindrischen Schaft (11) mit einem Dämmstoffhaltesteller (12) und eine in den Schaft (11) eingeführte Befestigungsschraube (13) aufweisen,
mit einer Aufnahme (22) für den Dämmstoffhalter (10) und
mit einem Schraubendreher (24) zum Eindrehen der Befestigungsschraube (13) des Dämmstoffhalters (10) in eine Dachunterkonstruktion oder eine Wand (1),
wobei zwischen der Aufnahme (22) und dem Schraubendreher (24) ein Sperrelement (26) zum Verhindern einer axialen Relativverschiebbarkeit von Aufnahme (22) und Schraubendreher (24) angeordnet ist,
wobei dem Sperrelement (26) eine Ausrückeinrichtung (30) zum Freigeben der axialen Relativverschiebbarkeit von Aufnahme (22) und Schraubendreher (24) zugeordnet ist,
wobei die Aufnahme (22) ein freies Ende einer den Schraubendreher (24) umschließenden Sperrhülse (25) ist und
wobei die Ausrückeinrichtung (30) eine die Sperrhülse (25) umschließende Auslösehülse (31) umfasst, **dadurch gekennzeichnet, dass** die Auslösehülse (31) manuell verschiebbar ausgebildet ist und dass das die Aufnahme (22) bildende freie Ende der Sperrhülse (25) einen Teller (23) durchsetzt und über den Teller (23) axial vorsteht.

2. Werkzeug nach Anspruch 1, **dadurch gekennzeichnet, dass** die Sperrhülse (25) und die Auslösehülse durch eine zwischen ihnen angeordnete Feder (28) in eine Ausgangsstellung vorgespannt sind.

3. Werkzeug nach Anspruch 1 oder 2, **dadurch gekennzeichnet, dass** das Sperrelement (26) wenigstens einen zwischen dem Schraubendreher (24) und der Auslösehülse angeordneten und wahlweise mit einer Vertiefung in dem Schraubendreher (24) oder mit einer Ausnehmung (32) in der Auslösehülse in und außer Eingriff bringbaren Wälzkörper aufweist.

4. Werkzeug nach Anspruch 3, **dadurch gekennzeichnet, dass** zwischen der Sperrhülse (25) und dem Schraubendreher (24) ein Wegbegrenzungs- und Drehmitnahmeelement (29) angeordnet ist.

5. Werkzeug nach Anspruch 4, **dadurch gekennzeichnet, dass** der Schraubendreher (24) für das Wegbegrenzungs- und Drehmitnahmeelement (29) wenigstens einen Anschlag (37) für die hintere Begrenzung der axialen Relativverschiebung von Aufnahme (22) und Schraubendreher (24) aufweist.

6. Werkzeug nach einem der vorhergehenden Ansprüche, **dadurch gekennzeichnet, dass** das die Aufnahme (22) bildende freie Ende der Sperrrhülse (25) im Querschnitt unrund ausgebildet ist.

## Claims

1. A tool for fitting insulation holders (10) on roofs or walls,
wherein the insulation holders (10) respectively have a hollow cylindrical shaft (11) with an insulation holder disk (12) and a fixing screw (13) inserted into the shaft (11),
having a seat (22) for the insulation holder (10) and
having a screwdriver (24) for screwing the fixing screw (13) of the insulation holder (10) into a roof substructure or a wall (1),
wherein a locking element (26) is disposed between the seat (22) and the screwdriver (24) to prevent the seat (22) and the screwdriver (24) from being axially displaceable relative to each other,
wherein a release device (30) is associated with the locking element (26) to enable the seat (22) and the screwdriver (24) to be displaced axially relative to each other,
wherein the seat (22) is a free end of a locking sleeve (25) surrounding the screwdriver (24), and
wherein the release device (30) comprises a disengaging sleeve (31) surrounding the locking sleeve (25), **characterized in that** the disengaging sleeve (31) is configured so as to be manually displaceable and **in that** the free end of the locking sleeve (25) forming the seat (22) passes through a disk (23) and protrudes axially beyond the disk (23).

2. The tool as claimed in claim 1, **characterized in that** the locking sleeve (25) and the disengaging sleeve (31) are pretensioned into a starting position by means of a spring (28) disposed between them.

3. The tool as claimed in claim 1 or claim 2, **characterized in that** the locking element (26) has at least one roller element disposed between the screwdriver (24) and the disengaging sleeve (31) which can be selectively brought into and out of engagement with an indentation in the screwdriver (24) or with a recess (32) in the disengaging sleeve (31).

4. The tool as claimed in claim 3, **characterized in that** a path-limiting and rotary entrainment element (29) is disposed between the locking sleeve (25) and the screwdriver (24).

5. The tool as claimed in claim 4, **characterized in that** the screwdriver (24) has at least one back stop (37) for the path-limiting and rotary entrainment element (29) to limit the relative axial displacement of the seat (22) and screwdriver (24).

6. The tool as claimed in one of the preceding claims, **characterized in that** the free end of the locking sleeve (25) forming the seat (22) is not round in cross-section.

## Revendications

1. Outil destiné au montage de supports (10) d'isolant sur des toits ou sur des murs,
les supports (10) d'isolant comportant chacun une tige (11) cylindrique creuse avec un régleur (12) de support d'isolant et une vis de fixation (13) introduite dans la tige (11),
avec un logement (22) pour le support d'isolant (10) et
avec un tournevis (24) pour visser la vis de fixation (13) du support d'isolant (10) dans une substructure de toit ou dans un mur (1),
entre le logement (22) et le tournevis (24) étant placé un élément de blocage (26) pour empêcher une possibilité de déplacement relative entre le logement (22) et le tournevis (24),
à l'élément de blocage (26) étant associé un système de déclenchement (30) destiné à libérer la possibilité de déplacement relatif entre le logement (22) et le tournevis (24),
le logement (22) étant une extrémité libre d'une douille de blocage (25) entourant le tournevis (24) et
le système de déclenchement (30) comportant une douille de déclenchement (31) entourant la douille de blocage (25), **caractérisé en ce que** la douille de déclenchement (31) est conçue en étant manuellement déplaçable et **en ce que** l'extrémité libre de la douille de blocage (25) qui forme le logement (22) traverse un disque (23) et saillit en direction axiale par-dessus le disque (23).

2. Outil selon la revendication 1, **caractérisé en ce que** la douille de blocage (25) et la douille de déclenchement (31) sont précontraintes dans une position de départ, par un ressort (28) placé entre eux.

3. Outil selon la revendication 1 ou la revendication 2, **caractérisé en ce que** l'élément de blocage (26) comporte au moins un corps de roulement placé entre le tournevis (24) et la douille de déclenchement (31) et pouvant être amené au choix en engagement ou hors engagement avec un creux dans le tournevis (24) ou avec un évidement (32) dans la douille de déclenchement (31).

4. Outil selon la revendication 3, **caractérisé en ce qu'**entre la douille de blocage (25) et le tournevis (24) est placé un élément de limitation de la course et d'entraînement en rotation (29).

5. Outil selon la revendication 4, **caractérisé en ce que** pour l'élément de limitation de la course et d'entraînement en rotation (29), le tournevis (24) comporte au moins une butée (37) pour la limitation arrière du déplacement relatif axial du logement (22) et du tournevis (24).

6. Outil selon l'une quelconque des revendications précédentes, **caractérisé en ce que** l'extrémité libre formant le logement (22) de la douille de serrage (25) est conçue avec une section transversale ovalisée.
